Europäisches Patentamt

European Patent Office

Office européen des brevets

(11) Veröffentlichungsnummer: **0 407 691 B1**

(19)

# EUROPÄISCHE PATENTSCHRIFT

(12)

(45) Veröffentlichungstag der Patentschrift: **18.05.94**

(51) Int. Cl.5: **H02M 3/337**

(21) Anmeldenummer: **90106106.9**

(22) Anmeldetag: **30.03.90**

(54) **Verfahren zur Strombegrenzung bei einem Gegentaktgleichspannungswandler.**

(30) Priorität: **01.07.89 DE 3921724**

(43) Veröffentlichungstag der Anmeldung:
**16.01.91 Patentblatt 91/03**

(45) Bekanntmachung des Hinweises auf die
Patenterteilung:
**18.05.94 Patentblatt 94/20**

(84) Benannte Vertragsstaaten:
**DE ES FR GB IT NL**

(56) Entgegenhaltungen:
**EP-A- 0 077 958**
**US-A- 4 293 902**

**DESIGN OF POWER CONVERTERS FOR SPA-
CE TWTA's; Tech-notes, Watkins-Johnson
Co., Palo Alto, USA**

**PATENT ABSTRACTS OF JAPAN vol. 6, no.
52 (E-100)(930) 07 April 1982 ; & JP-A-56 166
771**

(73) Patentinhaber: **ANT Nachrichtentechnik GmbH
Gerberstrasse 33
D-71522 Backnang(DE)**

(72) Erfinder: **Ohms, Franz, Dipl.-Ing.
Reuteweg 14
D-7163 Oberrot-Hausen(DE)**

EP 0 407 691 B1

**Beschreibung**

Die Erfindung geht aus von einem Verfahren zur Strombegrenzung bei einem Gegentaktgleichspannungswandler.

Wenn bei Gegentaktgleichspannungswandlern eine Strombegrenzung notwendig ist, kann auf bereits bekannte Verfahren zurückgegriffen werden. So kann beispielsweise ein Serienregler oder ein Schaltregler vom Buck-Typ (Tech-notes Design of Power Converters for Space TWTA's Watkins Johnson Co., Palo Alto, CA, USA) dem ungeregelten Gegentaktgleichspannungswandler vorgeschaltet werden. Eine andere Möglichkeit besteht darin, den Gleichspannungsgegentaktwandler pulsbreitengeregelt mit rückspeisender Speisedrossel auszubilden (DE PS 30 20 745). Alle drei Versionen haben die entscheidenden Nachteile, daß sie im Normalbetrieb den Wirkungsgrad senken und zusätzlichen Raum und Gewicht an Leistungselementen erfordern, was für Satellitenanwendungen besonders ungünstig ist.

Aus der US 4,293,902 ist eine Strombegrenzungsschaltung für einen Gegentaktgleichspannungswandler bekannt. Der fließende Energieaufnahmestrom des Gegentaktgleichspannungswandlers wird über einen Stromsensor erfaßt, gleichgerichtet (aufintegriert) und mit einem Sägezahnsignal verglichen. Erreicht der Energieaufnahmestrom eine bestimmte Höhe des Sägezahnsignals, wird der entsprechende Gegentaktschalter abgeschaltet. Es erfolgt demnach eine Pulsbreitenmodulation in Abhängigkeit des Energieaufnahmestroms mit dem Ziel den Energieaufnahmestrom konstant zu halten.

Der Erfindung liegt die Aufgabe zugrunde, für das Verfahrens eingangs genannter Art eine Strombegrenzung anzugeben, die es gestattet, den arithmetischen Mittelwert des Ausgangsstroms des Gleichspannungswandlers konstant zu halten. Außerdem soll ein Gegentaktgleichspannungswandler mit einer solchen Strombegrenzung aufgezeigt werden. Diese Aufgabe wird gelöst bezüglich des Verfahrens durch die Schritte des Patentanspruches 1 und bezüglich des Gleichspannungswandlers mit einer derartigen Strombegrenzung durch die Merkmale des Patentanspurches 4. Die weiteren Ansprüche betreffen Weiterbildungen.

Das Verfahren nach der Erfindung besitzt den Vorteil, daß keine zusätzlichen Leistungselemente benötigt werden. Ein weiterer Vorteil ist, daß der arithmetische Mittelwert des Ausgangsstromes des Gegentaktgleichspannungswandlers innerhalb einer Schaltperiode eingestellt wird. Im Gegensatz zu Spitzenstrombegrenzungen sinkt der arithmetische Mittelwert des Ausgangstromes nicht ab. Eine Fold-Back-Kennlinie mit dem Nachteil, daß der Gleichspannungswandler in einen Arbeitspunkt gelangen kann, aus dem er von selbst nicht wieder herauskommt, läßt sich mit den Maßnahmen der Erfindung vermeiden. Bei der Strombegrenzung nach der Erfindung läßt sich ein Gegentaktgleichspannungswandler auch mit einem Schaltregler vom Boost-Typ als Vorregler betreiben. Der Wirkungsgrad eines nach den Schritten der Erfindung aufgebauten Gleichspannungswandlers liegt bei > 90 % im Falle einer variablen Eingangsspannung und einem Schaltregler vom Boost-Typ als Vorregler.

Anhand der Zeichnungen wird das Verfahren der Erfindung im Ausführungsbeispiel erläutert. Es zeigen
Fig. 1 ein Prinzipschaltbild für einen Gegentaktwandler mit einer Strombegrenzung nach der Erfindung,
Fig. 2 ein Ersatzschaltbild für die Signale am Komparator,
Fig. 3 die Beschaltung des Komparators und des Pulsfrequenzmodulators.

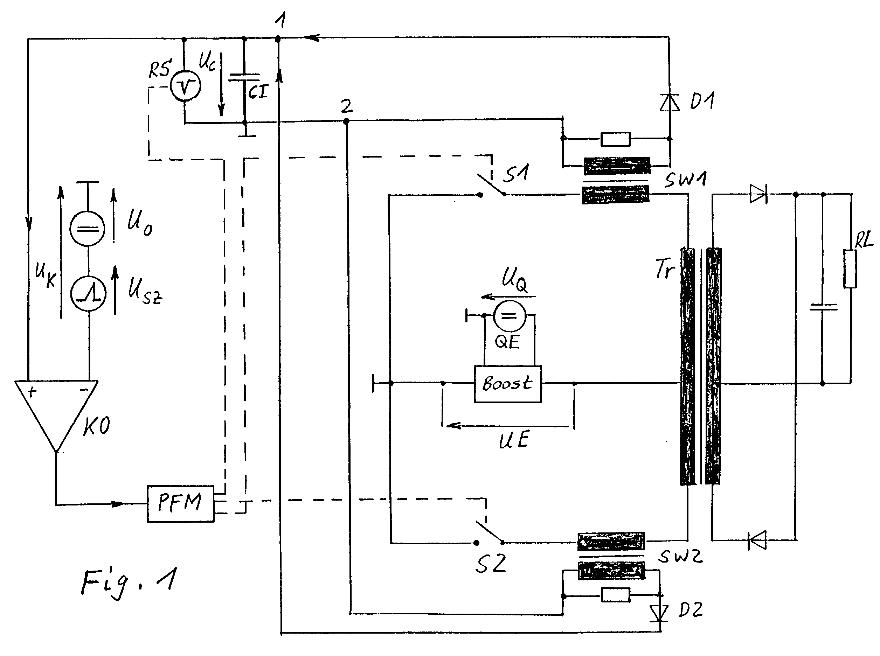

Im Prinzipschaltbild nach Fig. 1 ist eine Eingangsgleichspannungsquelle QE als Versorgungsquelle für einen herkömmlichen Schaltregler vom Boost-Typ vorgesehen.

Dieser Boostregler dient als Vorregler für den Gegentaktgleichspannungswandler. Dieser weist die beiden Gegentaktschalter S1 und S2, beispielsweise Bipolartransistoren, im Primärkreis des Transformators Tr des Gegentaktgleichspannungswandlers auf. Im Sekundärkreis dieses Transformators Tr befinden sich Gleichrichterelemente und der Lastwiderstand RL. Durch die Ausbildung des Vorreglers als Boostregler entspricht die minimale Eingangsspannung UE für den Gegentaktgleichspannungswandler der Spannung UQ der Quelle QE. Zur Erfassung des Eingangsstromes des Gegentaktgleichspannungswandlers sind jeweils in den Strompfaden der Schalter S1 und S2 und der Primärwicklung des Transformators Tr Strommeßwandler, SW1 und SW2, vorgesehen. Die Ausgänge dieser Strommeßwandler SW1 und SW2 sind nach einer jeweiligen Führung über Gleichrichterelemente D1, D2 parallel geschaltet. Die durch diese Parallelschaltung vereinigten gleichgerichteten Ausgangssignale der Strommeßwandler SW1 und SW2 werden an den Klemmen 1, 2 einem Integrationskondensator CI zugeführt. Da die Schalter S1 und S2 im Gegentakt mittels eines Pulsfrequenzmodulators PFM leitend gesteuert werden, steht so am Integrationskondensator CI ein zum Eingangsstrom des Gegentaktgleichspannungswandlers proportionales Signal zum Aufintegrieren zur Verfügung. Der Ladevorgang des Integrationskondensator CI wird von einer Rücksetzeinrichtung RS derart gesteuert, daß das Aufintegrieren jeweils während eines Schaltzyklus, also der Leitendzeit des entsprechenden Schalters S1 und S2, erfolgt. Am Ende des jeweiligen Schaltzyklus wird der Integrationskondensator CI schnell entladen, damit er für einen neuen Integrationsvorgang zur Verfügung steht. Am Integrationskondensator CI erscheint so eine Spannung $U_C$, welche proportional zur momentanen Ladung pro Einschaltpuls für Schalter S1 bzw. S2 ist. Das Signal $U_C$ wird mittels eines Komparators KO mit einer Referenzspannung $U_K$ verglichen, welche aus einer Sägezahnspannung $U_{SZ}$ und einer dieser überlagerten Offsetgleichspannung $U_0$ besteht. Wenn die Spannung $U_C$ größer wird als die Referenzspannung $U_K$ wird der jeweils gerade leitend gesteuerte Schalter S1 bzw. S2 abgeschaltet.

Der Anstieg des Eingangsstromes IE des Gegentaktgleichspannungswandlers ist durch die Streuinduktivität des Transformators Tr bestimmt. Hier erfolgt der Stromanstieg umgekehrt proportional zur Streuinduktivität. Die Energieaufnahme, d.h. der Strom durch den Schalter S1, wird beendet, wenn die momentane Ladung pro Einschaltpuls für Schalter S1 den durch die Referenzspannung $U_K$ festgelegten Wert zu überschreiten beginnt. Nach einer vorbestimmten Lückzeit $T_g$ wird der Schalter S2 über den Pulsfrequenzmodulator PFM eingeschaltet und am Integrationskondensator CI erscheint eine durch den Einschaltpulsimpuls des Schalters S2 bestimmte ladungsproportionale Spannung $U_C$. Wie zuvor wird nun der Schalter S2 in Abhängigkeit der Referenzspannung $U_K$ abgeschaltet. Die Lückzeit wird mindestens so groß gewählt, daß während dieser Zeit das Schwingungssystem, bestehend aus dem Transformator des Gegentaktgleichspannungswandlers mitsamt sekundärseitigen Gleichrichtern sowie parasitären eigenresonanzbestimmenden Elementen, z. B. Zuleitungen, Lagenkapazität, ..., von selbst umschwingen kann. Die Spannung am Transformator ändert während dieser Lückzeit ihre Polarität. Eine ausführlichere Beschreibung für die Einstellung der mindestens erforderlichen Lückzeit ist der EP 77 958 B1 zu entnehmen.

Die jeweils pro Schaltzyklus vorgenommene Strombegrenzung arbeitet so lange, bis der Überstrom-Betriebsfall beendet ist. Die beiden Schalter S1 und S2 werden dann mit Impulsen gleicher Länge eingeschaltet und keiner der Steuerimpulse der Schalter S1 und S2 wird verkürzt, da die Spannung $U_C$ nicht vorzeitig die Höhe der Referenzspannung $U_K$ erreicht d.h. es ist keine Pulsfrequenzregelung zur Strombegrenzung wirksam. Eine dem Gegentaktgleichspannungswandler bedarfsweise beigeordnete Unterspannungsschutzvorrichtung kann bei länger anhaltenden Überströmen die Schalter S1 und S2 abschalten.

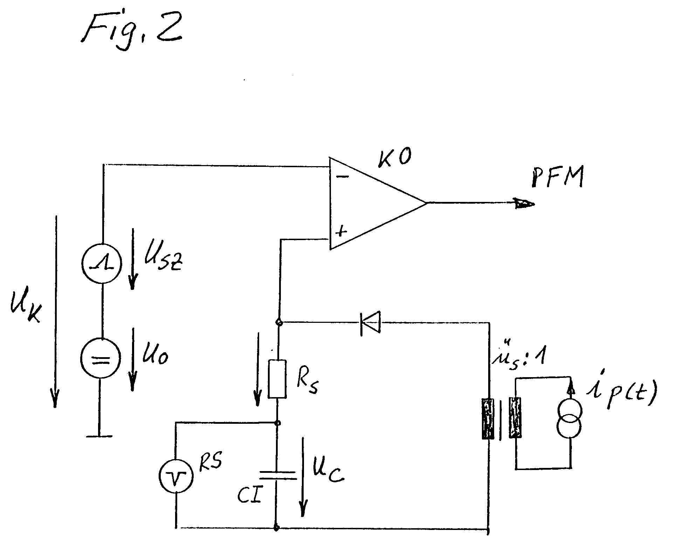

Für die vorgestellte Strombegrenzung kann die Übertragungsfunktion des arithmetischen Mittelwertes des Ausgangsstromes $I_{ar}$ des Gegentaktgleichspannungswandlersanhand des Ersatzschaltbildes nach Fig. 2 abgeleitet werden.

Für die Spannung $U_C$ gilt:

$$U_C = \frac{1}{\ddot{u}_S \cdot C} \int_0^t i_{p(t)} dt$$

Hierin bedeuten

C = Kapazität des Integrationskondensators CI,

$\ddot{u}_s$ = Übersetzungsverhältnis der beiden Strommeßwandler SW1 und SW2,

$i_{p(t)}$ = momentaner Eingangsstrom des Gegentaktgleichspannungswandlers.

Der Wert des Widerstandes $R_S$ ist bei dieser Betrachtung vernachlässigt.

Mit der Spannungsgleichung

$$U_K = U_0 + U_{SZ}$$

am Komparator KO gilt:

$$U_K = U_0 + \frac{\hat{U}_{SZ}}{T_{SZ}} \cdot t,$$

wobei

$$\frac{\hat{U}_{SZ}}{T_{SZ}}$$

den Anstieg der Sägezahnspannung $U_{SZ}$ darstellt. Im Abschaltzeitpunkt $t = T_{on}$, wobei $T_{on}$ die Leitendzeit des Schalters S1 bzw. S2 ist, kann $U_C = U_K$ gesetzt werden. Mit obigen Gleichungen ergibt sich dann:

$$\frac{1}{\ddot{u}_S \cdot C} \cdot \int_0^{T_{on}} i_{p(t)} dt = U_0 + \frac{\hat{U}_{SZ}}{T_{SZ}} \cdot T_{on}$$

Mit dem Ausdruck:

$$\int_0^{T_{on}} i_{p(t)} dt = Qp,$$

worin Qp die Ladung pro Einschaltpuls einer der Schalter S1, S2 bedeutet, und

$$I_{ar} = \frac{Qp}{T_{on} + T_g},$$

$I_{ar}$ = arithmetischer Mittelwert des Ausgangsstromes des Gegentaktgleichspannungswandlers, gilt:

$$I_{ar} = \frac{\ddot{u}_S \cdot C \cdot U_0}{T_g} \cdot \frac{1 + \dfrac{\hat{U}_{SZ}}{T_{SZ}} \cdot \dfrac{T_g}{U_0} \cdot \dfrac{T_{on}}{T_g}}{1 + \dfrac{T_{on}}{T_g}}$$

Mit der Dimensionierung:

$$\frac{\hat{U}_{SZ}}{T_{SZ}} \cdot \frac{T_g}{U_0} = 1$$

wird der arithmetische Mittelwert $I_{ar}$ unabhängig vom Verhältnis Leitendzeit/Nichtleitendzeit der Schalter S1 und S2 und unabhängig von deren Schaltfrequenzen sowie vom Stromspitzenwert. Da $\hat{U}_{SZ}$, $T_g$, $T_{SZ}$, und $U_0$

nach obiger Einstellung unverändert bleiben, arbeitet die Strombegrenzung nach der Erfindung so, daß der arithmetische Mittelwert $I_{ar}$ des Ausgangsstromes des Gegentaktgleichspannungswandlers konstant bleibt, wobei die Ausschaltzeiten der beiden Schalter S1 und S2 konstant gehalten werden.

Für $I_{ar}$ gilt demnach:

$$I_{ar} = \frac{ü_S \cdot C \cdot U_0}{T_g} \quad ,$$

Mit dieser Art von Strombegrenzung tritt kein Fold-Back Kennlinienverhalten auf. Der Gegentaktgleichspannungswandler mit einer solchen Strombegrenzung kann sogar eine Last mit Stromsenkenverhalten speisen.

In realen Schaltkreisen treten unvermeidliche Verzögerungszeiten auf. Der Komparator KO und der Pulsfrequenzmodulator PFM verursachen beispielsweise eine Signalverzögerung von etwa 1 $\mu$s und die Speicherzeiten der Schalter S1 und S2 ebenfalls eine Signalverzögerung von etwa 1 $\mu$s. Dies ergibt eine Gesamtverzögerung $T_S$. Zur Kompensation dieser Verzögerungszeiten wird erfindungsgemäß zur Spannung $U_C$ am Komparator (Fig. 2) ein stromproportionales Signal

$$U_P = \frac{I_P}{ü_S} \cdot R_S$$

addiert, mit $I_P$ = gleichgerichteter Wert des Stromes $i_{p(t)}$ und $R_S$ = Serienwiderstand zum Kondensator Cl. Für die Ladung $Q_P$ pro Einschaltpuls gilt dann abweichend von der vorherigen Betrachtung:

$$Q_P = Q_{P_1} + T_S \cdot I_{P(t=T_{on})}$$

$$Q_{P_1} = ü_S \cdot C\left(U_0 + \frac{\hat{U}_{SZ}}{T_{SZ}} \cdot T_{on} - \frac{I_{P(t=T_{on})} \cdot R_S}{ü_S}\right)$$

Damit ergibt sich:

$$I_{ar} = \frac{ü_S \cdot C \cdot U_0}{T_g} \cdot \frac{1 + \dfrac{\hat{U}_{SZ} \cdot T_g}{T_{SZ} \cdot U_0} \cdot \dfrac{T_{on}}{T_g} + \left(\dfrac{T_S}{C \cdot R_S} - 1\right) \cdot \dfrac{R_S}{ü_S \cdot U_0} \cdot I_{P(t=T_{on})}}{1 + \dfrac{T_{on}}{T_g} + \dfrac{T_S}{T_g}}$$

EP 0 407 691 B1

Der Ausdruck

$$\frac{\hat{U}_{SZ} \cdot T_g}{T_{SZ} \cdot U_0}$$

wird gemäß voriger Betrachtung zu 1 gewählt. Bedarfsweise kann auch der Ausdruck

$$\left(\frac{T_S}{C \cdot R_S} - 1\right)$$

durch die Dimensionierung von $R_S$ zu 0 gemacht werden. Damit erhält man die vereinfachte Gleichung:

$$I_{ar} = \frac{\ddot{u}_S \cdot C \cdot U_0}{T_g} \cdot \frac{1 + \dfrac{T_{on}}{T_g}}{1 + \dfrac{T_{on}}{T_g} + \dfrac{T_S}{T_g}}$$

Da $T_S/T_g$ klein ist, ist der arithmetische Strommittelwert $I_{ar}$ nahezu unabhängig vom Verhältnis Leitendzeit/Nichtleitendzeit der Schalter S1 und S2, wie auch letztere Gleichung zeigt.

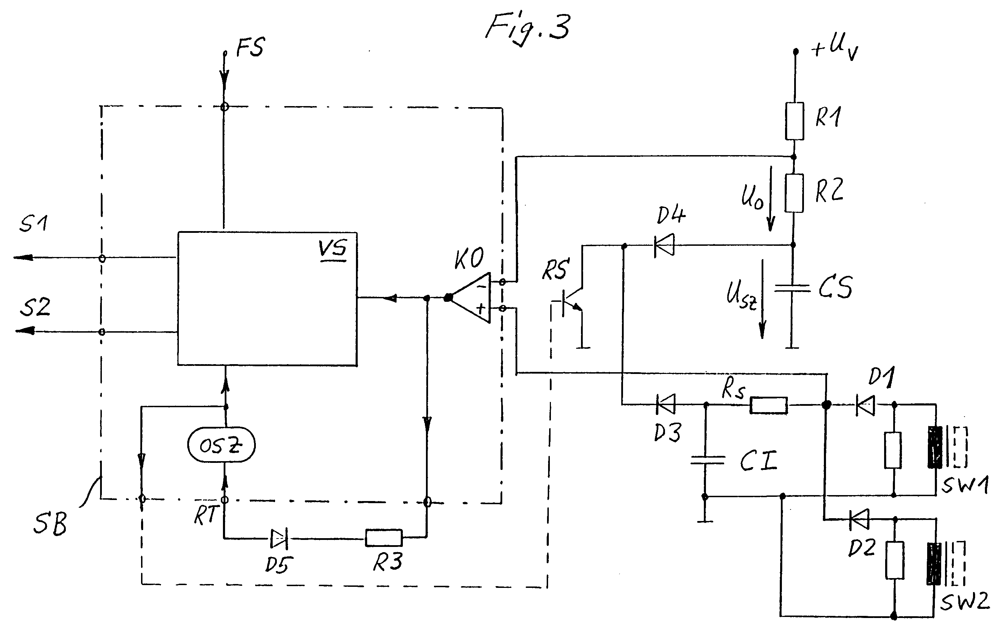

Nachfolgend wird ein vorteilhaftes Ausführungsbeispiel für die Beschaltung des Komparators KO und des Pulsfrequenzmodulators PFM aufgezeigt (Fig. 3). Zur Erzeugung der Sägezahnspannung $U_{SZ}$ ist eine Stromquelle vorgesehen, realisiert durch die mit dem Widerstand R1 beschaltet Versorgungsspannung $U_V$, mittels derer ein Kondensator CS aufladbar ist. In Serie zu diesem Kondensator CS liegt ein Widerstand R2, an dem die erforderliche Offsetspannung $U_0$ abfällt. Die Sägezahnspannung $U_{SZ}$ ist klein gegenüber der Versorgungsspannung $U_V$, so daß mit guter Näherung der Verlauf der Spannung am Kondensator CS linear ist. Die Entladung des Kondensators CS wie auch des Integrationskondensators CI wird von einem Transistor RS gesteuert. Wenn der Transistor RS durch einen Steuerimpuls, abgeleitet vom nachfolgend noch beschriebenen Pulsfrequenzmodulator PFM, leitend gesteuert wird, werden die potentialführenden Klemmen der beiden Kondensatoren CI und CS über die Entkopplungsdioden D3 und D4 gegen Masse geschaltet, also entladen: Als Pulsfrequenzmodulator PFM kann ein üblicher Schaltregler-Steuerbaustein SB verwendet werden, z. B. der integrierte Schaltkreis SG 1526 B von Silicon General. Dieser normalerweise als Pulsbreitenmodulator betreibbare Baustein SB läßt sich zu einem Pulsfrequenzmodulator PFM modifizieren durch Rücksetzen seines internen Oszillators OSZ über das Ausgangssignal des Komparators KO. Der Komparator KO ist invertierend ausgebildet, so daß der Oszillator durch ein LOW-Signal rücksetzbar ist. Dies geschieht hier über die äußere Beschaltung Widerstand R3, Entkoppeldiode D5 zum RT Eingang des Oszillators. Aus dem Ausgangssignal des Oszillators OSZ werden hier auch die Rücksetzimpulse für den Transistor RS gewonnen.

Die Aufbereitung der Steuerimpulse für die Schalter S1 und S2 aus dem Komparatorausgangssignal und dem Oszillatorsignal unter Berücksichtigung eventueller Schaltregler-Fehlersignale FS, wie beispielsweise Unterspannung am Ausgang, in Form von Verknüpfungsschaltwerken VS ist den jeweiligen Datenblättern für die Schaltregler-Steuerbausteine SB zu entnehmen.

**Patentansprüche**

1. Verfahren zur Strombegrenzung bei einem Gegentaktgleichspannungswandler, wobei der Eingangsstrom des Gegentaktgleichspannungswandlers gemessen wird, mit folgenden Schritten:
   - Aufintegrieren eines vom gemessenen Eingangsstrom abhängigen Signals jeweils pro Schaltzyklus,

6

- Bilden eines Steuersignals aus dem aufintegrierten Signal für einen Pulsfrequenzmodulator (PFM) zur Steuerung der Gegentaktschalter (S1, S2) des Gegentaktgleichspannungswandlers durch Vergleich des aufintegrierten Signals mit einer Offsetgleichspannung ($U_0$), der ein Sägezahnsignal ($U_{SZ}$) aufaddiert ist, wobei die Steigung des Sägezahnsignals so gewählt ist wie das Verhältnis aus der Offsetgleichspannung ($U_0$) zur Lückzeit ($T_g$), während der die Gegentakt-Schalter (S1, S2) stromlos sind und wobei die Ausschaltzeiten der Gegentaktschalter (S1, S2) konstant gehalten werden, sodaß der arithmetische Mittelwert des Ausgängen stromes Konstantgehalten wird,

2.  Verfahren nach Anspruch 1, dadurch gekennzeichnet, daß die Ausschaltzeiten der Gegentaktschalter (S1, S2) mindestens so groß gewählt sind, daß in diesen Zeiten das Schwingungssystem, bestehend aus Transformator (Tr) des Gegentaktgleichspannungswandlers mitsamt sekundärseitigen Gleichrichtern, von selbst umschwingen kann.

3.  Verfahren nach Anspruch 1 oder 2, dadurch gekennzeichnet, daß dem aufintegrierten Signal ein zum Eingangsstrom proportionales Signal zur Kompensation von Verzögerungszeiten aufaddiert wird.

4.  Gegentaktgleichspannungswandler mit Strombegrenzung zum Durchführen des Verfahrens nach einem der Ansprüche 1 bis 3, gekennzeichnet durch:
    - jeweils einen Strommeßwandler (SW1, SW2), in den Strompfaden der Gegentaktschalter (S1, S2) zum Transformator (Tr) des Gegentaktgleichspannungswandlers,
    - einen Integrationskondensator (CI), der mit den Ausgängen der Strommeßwandler (SW1, SW2) in Verbindung steht,
    - einer Einrichtung (RS) zur Ladesteuerung des Integrationskondensators (CI) pro Schaltzyklus der Gegentaktschalter (S1, S2),
    - einen Komparator (KO), dessen einer Eingang mit dem Integrationskondensator (CI) und dessen anderer Eingang mit einer Sägezahnsignalquelle ($U_{SZ}$) die mit einer Offsetgleichspannung ($U_0$) beaufschlagt ist, verbunden ist, wobei die Steigung des Sägezahnsignals der Sägezahnsignalquelle ($U_{SZ}$) folgendermaßen gewählt ist:

$$\frac{\hat{U}_{SZ}}{T_{SZ}} \cdot \frac{T_g}{U_0} = 1$$

mit

$$\frac{\hat{U}_{SZ}}{T_{SZ}} = \text{Steigung des Sägezahnsignals,}$$

$T_g$ = Lückzeit, während der die Gegentaktschalter (S1, S2) stromlos sind und
$U_0$ = Höhe der Offsetgleichspannung.
    - einen Pulsfrequenzmodulator (PFM) zur Steuerung der Einschaltzeiten der Gegentaktschalter (S1, S2) in Abhängigkeit des Ausgangssignals des Komparators (KO).

5.  Gegentaktgleichspannungswandler nach Anspruch 4, dadurch gekennzeichnet, daß die Speisequelle für den Gegentaktgleichspannungswandler ein Schaltregler vom Boost-Typ ist.

6.  Gegentaktgleichspannungswandler nach Anspruch 4 oder 5, dadurch gekennzeichnet, daß dem Integrationskondensator (CI) ein Widerstand ($R_S$) in Serie geschaltet ist, welcher mit einem zum Eingangsstrom des Gegentaktgleichspannungswandlers proportionalen Signal beaufschlagbar ist.

**Claims**

1.  A current limiting method for a push-pull d.c.-d.c. converter wherein the input current of the push-pull d.c.-d.c. converter is measured, comprising the following steps:
    - in each switching cycle, integrating a signal which is a function of the measured input current;
    - forming a control signal from the integrated signal for a pulse frequency modulator (PFM) to control the push-pull switches (S1, S2) of the push-pull d.c.-d.c. converter by comparing the integrated signal with an offset direct voltage ($U_0$) to which is added a sawtooth signal ($U_{SZ}$), with the increase in the sawtooth signal being selected in the same manner of the ratio of the offset direct voltage ($U_0$) to the gap period ($T_g$) during which the push-pull switches (S1, S2) are without current and wherein the off-periods of the push-pull switches (S1, S2) are kept constant so that the arithmetic mean of the output current is kept constant.

2.  A method according to claim 1, characterised in that the off-times of the push-pull switches (S1, S2) are selected to be at least long enough that during these times the oscillating system composed of the transformer (Tr) of the push-pull d.c.-d.c. converter together with the rectifiers on its secondary side is able to swing over on its own.

3.  A method according to claim 1 or 2, characterised in that a signal proportional to the input current is added to the integrated signal in order to compensate for delay times.

4.  A push-pull d.c.-d.c. converter with current limitation for implementation of the method defined in one of claims 1 to 3, characterised by:
    - a current measuring converter (SW1, SW2) in the respective current paths of the push-pull switches (S1, S2) leading to the transformer (Tr) of the push-pull d.c.-d.c. converter;
    - an integration capacitor (CI) which is in communication with the outputs of the current measuring converters (SW1, SW2);
    - a device (RS) for controlling the charging of the integrating capacitor (CI) per switching cycle of the push-pull switches (S1, S2);
    - a comparator (KO) whose one input is connected with the integration capacitor (CI) and whose other input is connected with a sawtooth signal source ($U_{SZ}$) which is charged with an offset direct voltage ($U_0$), with the increase in the sawtooth signal of the sawtooth signal source ($U_{SZ}$) being selected as follows:

$$\frac{\hat{U}_{SZ}}{T_{SZ}} \cdot \frac{T_g}{U_O} = 1$$

where

$$\frac{\hat{U}_{SZ}}{T_{SZ}} = \text{the increase in the sawtooth signal;}$$

$T_g$ = the gap period during which the push-pull switches (S1, S2) are without current; and
$U_0$ = the height of the offset direct voltage;
    - a pulse frequency modulator (PFM) for controlling the on-times of the push-pull switches (S1, S2) in dependence on the output signal of the comparator (KO).

5.  A push-pull d.c.-d.c. converter according to claim 4, characterised in that the voltage supply source for the push-pull d.c.-d.c. converter is a boost type switch controller.

6.  A push-pull d.c.-d.c. converter according to claim 4 or 5, characterised in that the integration capacitor (CI) is connected in series with a resistor ($R_S$) which can be charged with a signal that is proportional to the input current of the push-pull d.c.-d.c. converter.

8

EP 0 407 691 B1

**Revendications**

1. Procédé de limitation de courant pour un convertisseur de tension continue en push-pull, selon lequel on mesure le courant d'entrée du convertisseur de tension continue en push-pull, comprenant les étapes suivantes:
   - intégration, pour chaque cycle de commutation, d'un signal dépendant du courant d'entrée mesuré,
   - formation, à partir du signal intégré, d'un signal de commande pour un modulateur d'impulsions en fréquence (PFM) servant à commander les interrupteurs du montage en push-pull (S1, S2) du convertisseur de tension continue, par comparaison du signal intégré avec une tension continue de décalage ($U_O$), à laquelle est ajouté un signal en dents de scie ($U_{SZ}$), la pente du signal en dents de scie étant choisie en conformité avec le rapport de la tension continue de décalage ($U_O$) au temps d'intervalle ($T_g$) pendant lequel les interrupteurs du montage push-pull (S1, S2) ne sont pas traversés de courant, et les temps de coupure des interrupteurs du montage push-pull (S1, S2) étant maintenus constants, de manière que la moyenne arithmétique du courant de sortie soit maintenue constante.

2. Procédé selon la revendication 1, caractérisé en ce que les temps de coupure des interrupoteurs du montage en push-pull (S1, S2) sont choisis suffisamment longs pour que, dans ces temps, le système oscillant constitué du transformateur (Tr) du convertisseur de tension continue en push-pull, y compris les redresseurs côté secondaire, puisse passer de lui-même à l'autre état.

3. Procédé selon la revendication 1 ou 2, caractérisé en ce qu'un signal proportionnel au courant d'entrée est ajouté au signal intégré afin de compenser des temps de retard.

4. Convertisseur de tension continue en push-pull comprenant une limitation de courant pour la mise en oeuvre du procédé selon une des revendications 1 à 3, caractérisé par:
   - un transformateur ampèremétrique (SW1, SW2) dans chacun des circuits menant des interrupteurs du montage en push-pull (S1, S2) au transformateur (Tr) du convertisseur de tension continue en push-pull,
   - un condensateur d'intégration (CI) qui est en liaison avec les sorties des transformateurs ampèremétriques (SW1, SW2),
   - un dispositif (RS) pour commander la charge du condensateur d'intégration (CI) dans chaque cycle de commutation des interrupteurs du montage en push-pull (S1, S2),
   - un comparateur (KO) dont une entrée est reliée au condensateur d'intégration (CI) et dont l'autre entrée est reliée à une source de signal en dents de scie ($U_{SZ}$), à laquelle est appliquée une tension continue de décalage ($U_O$), la pente du signal en dents de scie de la source de signal en dents de scie ($U_{SZ}$) étant choisie selon la formule suivante:

$$\frac{\hat{U}_{SZ}}{T_{SZ}} \cdot \frac{T_g}{U_O} = 1$$

où

$$\frac{\hat{U}_{SZ}}{T_{SZ}} = \text{pente du signal en dents de scie,}$$

$T_g$ = temps d'intervalle pendant lequel les interrupteurs du montage en push-pull (S1, S2) ne sont pas traversés de courant et

$U_O$ = valeur de la tension continue de décalage, ainsi que par
   - un modulateur d'impulsions en fréquence (PFM) pour commander les temps d'enclenchement des interrupteurs du montage en push-pull (S1, S2) en fonction du signal de sortie du comparateur (KO).

9

**5.** Convertisseur de tension continue en push-pull selon la revendication 4, caractérisé en ce que la source d'alimentation pour le convertisseur de tension continue en push-pull est un régulateur à commutation de type survolteur.

**6.** Convertisseur de tension continue en push-pull selon la revendication 4 ou 5, caractérisé en ce qu'une résistance ($R_S$) est montée en série avec le condensateur d'intégration (CI), résistance à laquelle peut être appliqué un signal proportionnel au courant d'entrée du convertisseur de tension continue en push-pull.

Fig. 1

EP 0 407 691 B1

Fig. 2

KO

PFM

$U_{S2}$

$U_K$

$U_0$

$R_S$

RS

CI

$U_C$

$\ddot{u}_s : 1$

$i_p(t)$

EP 0 407 691 B1

Fig. 3

EP 0 407 691 B1